Europäisches Patentamt

European Patent Office

Office européen des brevets

(19)

(11) EP 0 540 111 B1

# (12) FASCICULE DE BREVET EUROPEEN

(45) Date de publication et mention
de la délivrance du brevet:
**24.01.1996 Bulletin 1996/04**

(51) Int Cl.6: **G01N 11/16**, G01N 29/02

(21) Numéro de dépôt: **92203300.6**

(22) Date de dépôt: **28.10.1992**

(54) **Rhéomètre acoustique haute fréquence et dispositif de mesure de la viscosité d'un fluide utilisant ce rhéomètre**

Hochfrequenz akustisches Rheometer, und dieses Rheometer verwendende Vorrichtung zur Messung der Viskosität eines Fluides

High-frequency acoustic rheometer, and device for measuring the viscosity of a fluid using this rheometer

(84) Etats contractants désignés:
**DE ES GB IT NL SE**

(30) Priorité: **30.10.1991 FR 9113434**

(43) Date de publication de la demande:
**05.05.1993 Bulletin 1993/18**

(73) Titulaire: **IMAJE S.A.**
**F-26500 Bourg les Valence (FR)**

(72) Inventeurs:
• **Soucemarianadin, Arthur**
**F-75116 Paris (FR)**
• **Gaglione, Renaud**
**F-75116 Paris (FR)**
• **Attane, Pierre**
**F-75116 Paris (FR)**

(74) Mandataire: **Dubois-Chabert, Guy et al**
**F-75008 Paris (FR)**

(56) Documents cités:
**EP-A- 0 297 032        US-A- 2 707 391**
**US-A- 3 719 907**

• **DATABASE WPI Section Ch, Week 7749, Derwent Publications Ltd., London, GB; Class E, AN 77-87763Y & SU-A-403 294 (SHUBNIKOV CRYSTALLO) 27 Avril 1977**
• **DATABASE WPIL Section Ch, Week 9006, Derwent Publications Ltd., London, GB; Class L, AN 90-042083 & JP-A-1 320 295 (KAGAKU GIJUTSU-CHO KINZ) 26 Décembre 1989**
• **JOURNAL OF THE ACOUSTICAL SOCIETY OF AMERICA. vol. 90, no. 3, Septembre 1991, NEW YORK US pages 1287 - 1297 C. BARNES ET AL. 'Shear wave detection of structural transitions of BSA and hemoglobin'**

## Description

La présente invention concerne un rhéomètre acoustique permettant la mesure des propriétés viscoélastiques d'un fluide soumis à un cisaillement périodique, ainsi qu'un dispositif de mesure de ces propriétés en utilisant le rhéomètre, notamment dans la gamme des hautes fréquences et un procédé de mesure mettant en oeuvre ce dispositif. L'intérêt des mesures de viscosité et d'élasticité des fluides à haute fréquence est d'accéder à la structure de ces fluides en relation avec leur composition. La détermination des propriétés mécaniques débouche sur des finalités industrielles importantes. En effet, ces fluides interviennent dans de nombreuses applications telles la fabrication des encres d'impression et des peintures, l'industrie agroalimentaire, la lubrification des systèmes mécaniques, ou bien encore dans la récupération des produits pétroliers.

Dans l'application particulièrement intéressante du rhéomètre pour la fabrication des encres, la fréquence de formation des gouttes étant comprise entre quelques dizaines de kilohertz et environ 125 kilohertz, le rhéomètre doit fonctionner en régime oscillant à une fréquence typique de 100 kilohertz. Pour cela, le fonctionnement du rhéomètre est basé sur le principe suivant : on expose le fluide à étudier au contact d'une seule surface mobile, animée d'une onde de torsion, qui crée au sein de ce fluide une onde plane de cisaillement simple, à une fréquence donnée située dans la gamme des 50 à 500 KHz. L'influence du fluide sur cette onde de cisaillement, reflétant ses propriétés viscoélastiques, est mesurée par le biais, d'une variation d'impédance caractéristique de la surface. Le dispositif de mesure de ces caractéristiques viscoélastiques des fluides, autrement appelé rhéomètre, comprend donc un transducteur, réalisé généralement à partir d'un cristal de quartz, qui est rigidement fixé à une extrémité d'un capteur, comme cela est décrit dans le brevet US 2,707,391. Ce capteur, réalisé à partir d'une tige métallique cylindrique de même diamètre que le transducteur, reçoit les vibrations du quartz sous la forme d'un train d'ondes et sa surface latérale en contact avec le fluide crée un mouvement de cisaillement du fluide. Deux grandeurs caractérisent la propagation de ces ondes de torsion dans la tige : la vitesse de phase B et l'atténuation d'amplitude A par unité de longueur. L'état de référence du capteur est défini en l'absence de fluide, par une impédance caractéristique $Z^*$ nulle, cet état étant non dispersif. La propagation des ondes de torsion qu'il reçoit est donc caractérisée par une vitesse $B_o$ et une atténuation $A_o$ propres.

La présence d'un fluide à l'interface latérale du capteur engendre une variation d'atténuation $\delta A$ de l'amplitude de l'onde de torsion ainsi qu'une variation de la vitesse de phase $\delta B$ par rapport à l'état de référence, qui sont proportionnelles à l'impédance caractéristique $Z^*$ du fluide. En effet, l'onde voyage à une vitesse plus rapide que dans l'état de référence et entraîne une variation de déphasage.

$$\delta B = B - B_o$$

D'autre part, l'onde de torsion de pulsation $\Omega$ se propage par réflexions successives sur la frontière latérale du capteur cylindrique, chaque réflexion s'accompagnant d'une dissipation de l'énergie acoustique par le fluide, ce qui provoque une augmentation de l'atténuation A au cours de la propagation de l'onde :

$$\delta A = A - A_o$$

A partir des relations de dispersion des deux états du capteur et de l'impédance $Z^*$, la formule de base qui relie la cause à l'effet :

$$Z^* = \frac{\alpha.v.a}{2} \ (\delta A + i\delta B)$$

est une relation linéaire, où la constante de proportionnalité est une caractéristique du capteur, sachant que :

- $\alpha$ est la masse volumique du capteur,
- v est la vitesse de propagation de l'onde de torsion dans la tige, en l'absence de fluide,
- a est le rayon de la tige,
- $\delta A$ est la variation d'atténuation d'amplitude par unité de longueur, en néper par mètre,
- $\delta B$ est la variation d'atténuation d'amplitude par unité de longueur, en radian par mètre.

Comme cela a été dit auparavant, la connaissance de l'impédance $Z^*$ du fluide donne accès aux propriétés viscoélastiques recherchées, car cette impédance $Z^*$ est liée par définition à la densité $\alpha_1$ du fluide qui rend compte de l'inertie et à sa viscosité complexe $\beta^*$ par la relation suivante :

$$Z^* = (i\Omega\alpha_1\beta^*)^{1/2}$$

$$Z = R + iX$$

De sorte que les mesures de la variation d'amplitude $\delta A$ et de déphasage $\delta B$ engendrées par le fluide au contact de la surface latérale du capteur cylindrique permettent de connaître les parties réelles R et imaginaires X de l'impédance $Z^*$ et d'obtenir ensuite la viscosité complexe $\beta^*$ du fluide, étant donné que :

$$\beta^* = \beta' - i\beta''$$

$$\beta' = 2RX/\Omega\alpha_1$$

$$\beta'' = (R^2\text{-}X^2)/\Omega\alpha_1$$

L'élément essentiel du rhéomètre haute fréquence est le transducteur de torsion, généralement constitué d'un cristal piézoélectrique de quartz sous forme d'un cylindre dont l'axe de torsion est parallèle à l'un de ses trois axes cristollagraphiques d'ordre 2 - axe X -, le quartz faisant partie de la classe 32 du système triclinique des cristaux. Une déformation de torsion est produite en excitant le cristal par un signal électrique à l'aide de deux paires d'électrodes orientées à +/- 45° par rapport à l'axe Y, perpendiculaire à l'axe X. Le quartz possède une très grande stabilité de réponse en fréquence, de sorte que le déphasage introduit par le fluide est susceptible d'être mesuré avec une grande précision.

Cependant, un tel rhéomètre à quartz présente un premier inconvénient dû au fait que le quartz excité électriquement génère un mode de torsion qui n'est pas pure mais couplé à une vibration radiale entraînant une variation du diamètre du cristal. Cela introduit une erreur de mesure, due probablement à la tension superficielle du fluide, qui est plus importante que la précision espérée par la stabilité en fréquence. L'erreur de mesure est d'autant plus importante que le fluide à mesure est peu visqueux : des imprécisions de + ou - 15 % sont possibles sur les mesures.

Un second inconvénient d'un rhéomètre à quartz vient du coefficient de couplage du quartz, c'est-à-dire du rendement en énergie mécanique de la sollicitation électrique du quartz, qui est faible - de l'ordre de 3 % -, ce qui oblige à utiliser des tensions d'excitation de plusieurs centaines de volts, pour que le capteur, qui est couplé au cristal de quartz reçoive une onde acoustique pas trop atténuée. L'effet du faible coefficient de couplage est de diminuer le rapport signal/bruit.

D'autres types de transducteurs de torsion sont décrits dans le brevet français 2 327 677 et dans le brevet américain 3 719 907. Dans ces deux cas, le mode de réalisation du transducteur de torsion est long, comportant plusieurs étapes de métallisation d'électrodes, de polarisation avec des champs électriques intenses (plusieurs milliers de volts/mm) et de gravure sélective. Ces différentes étapes ont pour conséquence d'augmenter le prix du transducteur sans que les performances en matière de déformation de torsion pure et de coefficient de couplage élevé ne soient améliorées par rapport aux transducteurs à quartz.

Par ailleurs, ces types de transducteurs, comme ceux à quartz, présentent l'inconvénient de ne fonctionner qu'à la fréquence de résonance du mode de torsion fondamental.

Ainsi, pour éviter ces inconvénients mentionnés ci-dessus et concernant la complexité de réalisation des transducteurs, le fonctionnement à une fréquence unique et les mesures imprécises surtout à faible viscosité, la présente invention a pour but la réalisation d'un rhéomètre de grande précision permettant de mesurer des caractéristiques viscoélastiques d'une grande variété de liquides, sur une gamme étendue de températures et de pressions. Le rhéomètre selon l'invention est de plus doté d'un transducteur générant un mode de torsion pure, avec un coefficient de couplage élevé, présentant une grande fiabilité et une simplicité d'utilisation, tout en autorisant les mesures à plusieurs fréquences de résonance. Ce rhéomètre comporte de plus un capteur adapté en impédance avec le transducteur et stable en température.

Selon un autre but de l'invention, le rhéomètre, automatisé par une instrumentation électronique de faible coût, est associé à un système de traitement numérique des données et peut mesurer la viscosité des fluides simultanément avec la densité.

Pour cela, l'objet de l'invention est un rhéomètre acoustique fonctionnant dans le domaine des hautes fréquences comprises entre plusieurs dizaines et plusieurs centaines de kiloHertz, comportant un transducteur de torsion composé d'un cristal piézoélectrique excité électriquement par l'intermédiaire d'électrodes, destiné à émettre et recevoir des ondes de torsion, couplé à un capteur desdites ondes de torsion plongé dans un réservoir de fluide à mesurer et réalisé à partir d'une tige en alliage de Fer et de Nickel, ayant subi un traitement approprié et dont le coefficient thermoélastique est voisin de zéro, le transducteur et le capteur étant plongés dans une enceinte, caractérisé en ce que :

- le transducteur est un cylindre de cristal de la classe des sillénites, de hauteur déterminant les fréquences de résonance du mode de torsion, et doté d'un moyen d'excitation électrique,
- le capteur est relié rigidement au transducteur par un point de colle d'épaisseur très inférieure à la longueur d'onde des ondes de torsion émises par le transducteur,

les diamètres respectifs du transducteur et du capteur étant choisis pour que le coefficient de réflexion à l'interface du transducteur-capteur soit nul.

Selon une autre caractéristique de l'invention, le transducteur du rhéomètre est soit un cristal d'oxyde de Bismuth et de Germanium $Bi_{12}GeO_{20}$, soit un cristal d'oxyde de Bismuth et de Silicium $Bi_{12}SiO_{20}$, soit un cristal d'oxyde de Bismuth et de Titane $Bi_{12}TiO_{20}$.

D'autres avantages et caractéristiques de l'invention apparaîtront à la lecture de la description suivante d'exemples particuliers de réalisation, ladite description étant faite en relation avec les dessins ci-annexés dans lesquels :

- la figure 1 est un schéma en coupe longitudinale illustrant un rhéomètre haute fréquence selon l'invention ;
- la figure 2 est une vue en coupe transversale d'un transducteur selon l'invention doté d'électrodes d'excitation disposées en cadrans ;
- la figure 3 est une vue en coupe transversale d'un transducteur selon l'invention polarisée par influence ;
- la figure 4 est un schéma du système électronique de traitement des mesures effectuées par le rhéomètre selon l'invention ;
- les figures 5a et 5b sont les courbes d'atténuation d'amplitude et de déphasage de l'onde de torsion dans un rhéomètre à quartz, pour de l'alcool ;
- les figures 5c et 5d sont les mêmes courbes pour un rhéomètre selon l'invention ;

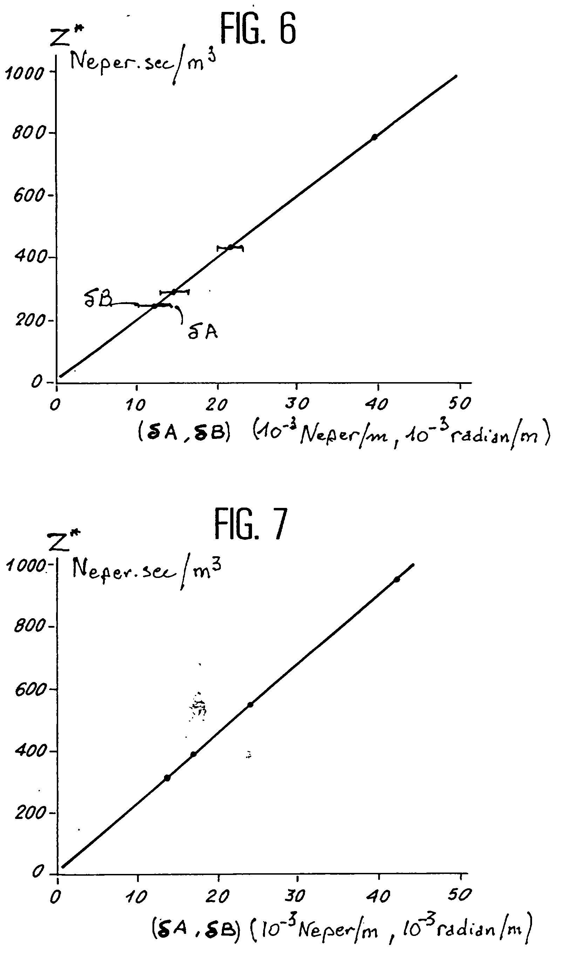

- la figure 6 est la courbe de sensibilité d'un rhéomètre à quartz pour un solvant newtonien et,
- la figure 7 est la courbe de sensibilité d'un rhéomètre selon l'invention, pour un solvant newtonien.

Les éléments portant les mêmes références dans les différentes figures remplissent les mêmes fonctions en vue des mêmes résultats.

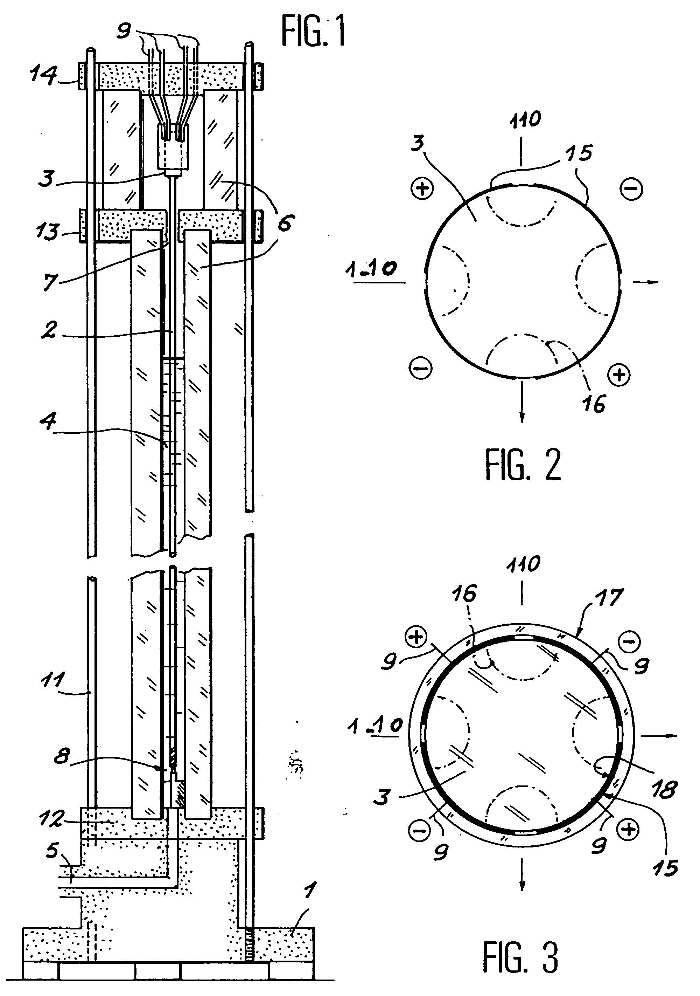

La figure 1 est un schéma en coupe longitudinale illustrant un exemple de réalisation d'un rhéomètre acoustique selon l'invention. Le rhéomètre repose sur un socle 1, en matériau stable en dimensions, - en acier par exemple - et comprend essentiellement deux éléments : le capteur 2, siège de la conversion de l'impédance mécanique du fluide à tester en l'impédance acoustique, et le transducteur 3, auquel il est fixé par collage, destiné à émettre et recevoir l'onde de torsion.

Le capteur 2 est une tige métallique cylindrique en alliage de Fer et de Nickel, choisit notamment pour son très faible coefficient de dilatation. De plus, le capteur en alliage de Fer et de Nickel est inerte vis-à-vis des solvants organiques et résiste à l'oxydation. En effet, une variation de température peut à elle seule induire un déphasage du train d'onde, par la combinaison de la dilatation thermique et de la variation du module élastique de Coulomb. Un traitement thermique de revenu de la tige permet d'annuler le coefficient thermoélastique de torsion afin d'obtenir une variation des dimensions du capteur qui soit nulle dans la gamme des températures de fonctionnement du rhéomètre, et donc de s'affranchir des problèmes de thermostatation. Le cycle thermique comprend une montée en température voisine de 350° C, maintenue ensuite pendant plusieurs heures et un refroidissement lent, sous atmosphère inerte afin de limiter l'oxydation. Les tiges sont suspendues verticalement dans le four de traitement pour prévenir les déformations et un étuvage fait suite au traitement thermique pour fixer les propriétés thermoélastiques des tiges. Ainsi, une stabilisation à 0,1° C près suffit alors que les matériaux utilisés dans les rhéomètres de l'art antérieur requéraient une stabilisation thermique à 0,005° C près.

Enfin, le choix de la hauteur de la tige est fonction de la gamme de fréquences et de la vitesse de propagation de l'onde de torsion. Le choix du rayon du capteur tient compte de l'état de référence du rhéomètre pour lequel l'impédance est nulle, de la sensibilité du rhéomètre qui est inversement proportionnelle au rayon et enfin de la liaison entre le capteur et le transducteur, effectuée par collage. Il est difficile de choisir un rayon inférieur à 2 mm, ce qui correspond à une fréquence de coupure supérieure à 1MHz. Cette liaison entre le transducteur 3 et le capteur 2 nécessite pour ce dernier une grande planéité de la face supérieure en contact avec le transducteur.

De plus, l'état de la surface latérale du capteur 2 doit être très soigné en raison de la distance de pénétration de l'onde de cisaillement dans un fluide en contact avec ledit capteur. On rectifie cet état de surface par un meulage pour obtenir une rugosité arithmétique très faible, voisine de $0,12\,\mu m$ et on contrôle le plus précisément possible la cylindricité de la tige.

Le transducteur 3 piézoélectrique émet un train d'onde qui résulte de sa vibration lorsqu'il est soumis à l'action d'un champ électrique extérieur mais il reçoit également le couple de torsion après qu'il a voyagé dans le capteur.

Le transducteur 3 est un cristal de la classe de symétrie et des Sillénites, soit la classe 23 du système cubique et en particulier un cristal d'oxyde de Bismuth et de Germanium $Bi_{12}GeO_{20}$, ou d'oxyde de Bismuth et de Silicium $Bi_{12}SiO_{20}$ ou d'oxyde de Bismuth et de Titane $Bi_{12}TiO_{20}$. Le cristal de $Bi_{12}GeO_{20}$ peut être facilement obtenu sous forme monocristalline par la technique de Czochralski.

Le cristal ainsi obtenu est de couleur jaune pâle avec une densité de $9,2\,g/cm^3$. Il présente des propriétés fortement piézoélectriques, est photoconducteur et photoréfractif. Le matériau de base est usiné à partir de sa forme brute de cristallogénèse en cylindres de différentes longueurs, qui déterminent les fréquences de résonance du mode de torsion ; il est peu friable, facilement usinable et de faible coût.

La classe 23 de symétrie du système cristallin cubique a été choisie car elle permet de générer un mouvement de torsion pure avec un coefficient de couplage électromécanique élevé, indiquant l'aptitude du cristal piézoélectrique à convertir l'énergie électrique en énergie élastique ou inversement. Pour l'oxyde $Bi_{12}GeO_{20}$, le coefficient du couplage est de l'ordre de 32 % pour une plaque plane.

Le transducteur 3 et le capteur 2 sont reliés rigidement l'un à l'autre par un joint de colle, ce qui est le moyen de liaison le plus satisfaisant vis-à-vis de la transmission acoustique, car un joint de colle de 10 µm d'épaisseur représente moins de 0,1 % de la longueur d'onde de l'onde de torsion, qui est de l'ordre de 1 cm à 100 KHz et l'ensemble de mesure

EP 0 540 111 B1

qu'ils constituent possède une atténuation propre.

L'onde de torsion subit une atténuation, d'une part de façon continue avec la propagation dans le capteur 2, et d'autre part de façon ponctuelle, par la réflexion aux extrémités du capteur et à l'interface entre le transducteur et le capteur. Les pertes liées à la propagation sont dues à l'absorption et à la diffusion de l'onde et sont limitées au-dessous d'une fréquence de 1 MHZ. Quant aux pertes dues à la réflexion de l'onde aux extrémités, elles sont négligeables. Seule l'interface entre le capteur et le transducteur limite la transmission de l'onde et fixe le niveau de l'atténuation propre du système. L'onde plane de torsion se propage toujours, dans la région de l'interface, sous le mode de référence, car cette région n'est pas mise en contact avec le fluide à tester. Le coefficient de réflexion $A_r$ à l'interface transducteur-capteur, en faisant l'approximation de deux milieux monodimensionnels, s'écrit :

$$A_r = \frac{Z_t \, D_t^{\,4} - Z_c \, D_c^{\,4}}{Z_t \, D_t^{\,4} + Z_c \, D_c^{\,4}}$$

où $Z_t$ et $Z_c$ sont les impédances acoustiques respectivement du transducteur et du capteur, et $D_t$ et $D_c$ leurs diamètres respectifs. Ainsi les diamètres $D_t$ et $D_c$ sont choisis afin d'annuler ce coefficient de réflexion $A_r$.

Le capteur 2 se présente donc sous la forme d'une tige cylindrique de 700 mm de longueur environ, dont la face supérieure parfaitement plane est collée au transducteur et la face inférieure est percée d'une ouverture conique de faible profondeur dans laquelle vient se loger une pointe de support 8, de très faible diamètre, 500 µm par exemple - permettant au capteur d'être maintenu verticalement à la base tout en minimisant les frottements lors de son mouvement de torsion, ce qui minimise les pertes acoustiques à la réflexion. Cette pointe 8 est en matériau résistant aux différents fluides à tester avec lesquels elle est en contact, leur pH pouvant notamment être acide.

A l'extrémité supérieure, le capteur 2 est guidé sur une hauteur de quelques millimètres par un guidage vertical 7 qui est une pièce de révolution dont le diamètre est très légèrement supérieur à celui du capteur et l'ensemble de mesure, constitué par le capteur 2 et le transducteur 3, est isolé thermiquement du milieu extérieur par une double enceinte thermostatée 6. Cette enceinte 6 est maintenue verticalement par trois tringles 11 vissées à la base sur le socle circulaire 1. Deux disques 12 et 13, coulissant dans les tringles 11, permettent le réglage horizontal. L'enceinte thermostatée 6 du capteur est constituée d'une enveloppe en verre de même hauteur que celle de la tige, et l'enceinte du transducteur 3 a une hauteur environ cinq fois plus grande que la hauteur du transducteur, ces deux enceintes étant alimentées en série, par un fluide caloporteur maintenant la température constante.

Le fluide à tester est injecté autour du capteur 2 dans le réservoir constitué par la paroi interne de l'enceinte 6, par un canal d'injection 5 placé dans le disque 12 inférieur, sur une hauteur inférieure à celle du capteur 2. Le diamètre du réservoir doit être très supérieur à celui du capteur 2 afin que la paroi du réservoir n'intervienne pas lors de la propagation de l'onde de torsion dans le fluide. Le disque supérieur 13 est percé afin de maintenir la pression dans le réservoir de fluide à une valeur constante égale à la pression atmosphérique.

Le transducteur 3 devant être soumis à l'action d'un champ électrique pour vibrer, des connexions électriques 9 alimentent en tension des électrodes placées contre le transducteur et sortent du rhéomètre par un troisième disque coulissant 14 réglant horizontalement l'enceinte thermostatée du transducteur 3.

La figure 2 est une coupe transversale du transducteur selon l'invention. Le cristal est excité électriquement par l'intermédiaire d'électrodes 15 disposées selon une configuration dite en cadrans, c'est-à-dire que chaque électrode recouvre, un quart de la surface latérale du cristal 3 constituant le transducteur. Les électrodes sont séparées les unes des autres par les axes cristallographiques (110) et (1-10) et les électrodes, alimentées par une tension positive, alternent avec celles alimentées par une tension négative, créant ainsi des lignes de champ 16 en arc de cercle.

La réalisation de ces électrodes sur le cristal nécessite tout d'abord la détermination de l'orientation cristollagraphique du cristal par un goniomètre à rayons X, puis le dépôt d'une couche mince de métal conducteur par évaporation ou pulvérisation par exemple. Puis la séparation de la surface métallisée en cadrans s'effectue par gravure chimique.

Le dispositif de polarisation est constitué de quatre contacteurs métalliques, soudés verticalement sur un support carré. Le cristal du transducteur est coiffé par le dispositif. Les contacteurs exercent une légère pression sur les quatre électrodes latérales du transducteur, les points de contact étant situés à la mi-hauteur du cristal. Un avantage de cette configuration des électrodes réside dans l'obtention d'un coefficient du couplage élevé (22 %) pour le mode fondamental.

La figure 3 est une coupe transversale du transducteur selon l'invention, polarisé par influence, c'est-à-dire ne portant pas les électrodes directement sur le cristal. Il est coiffé par un tube de verre 17 de même hauteur que le cristal mais de diamètre inférieur légèrement plus élevé que celui du cristal. Le tube de verre est métallisé sur sa face interne 18 en regard du cristal, par évaporation laser par exemple.

La méthode consiste à métalliser et graver en cadrans un tube destiné à polariser le cristal du transducteur par influence électrostatique. Le tube de verre sélectionné possède une cylindricité parfaitement contrôlée et est métallisé par évaporation de Chrome et de Nickel sur sa surface interne. Les traits de séparation sont réalisés par gravure thermique, à l'aide d'un rayon laser focalisé sur la surface interne du tube. Le diamètre du cylindre de cristal composant le transducteur doit être finement ajusté au diamètre interne du tube de verre pour minimiser l'interstice entre les deux surfaces latérales, de manière à limiter l'effet d'écran de l'air.

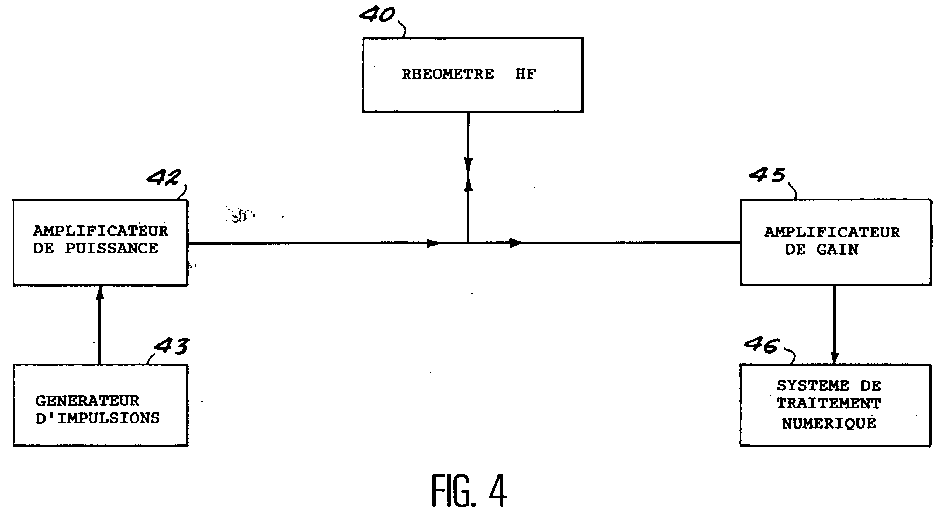

La figure 4 est un schéma du dispositif de mesure de la viscosité d'un fluide, utilisant un rhéomètre 40, objet de l'invention.

Il comprend d'une part, un générateur 41 d'impulsions qui est connecté à un amplificateur de puissance 42, de sorte que le signal provenant du générateur d'impulsions 41 est amplifié avant de parvenir au rhéomètre. Il comprend d'autre part, un amplificateur de gain 45 qui reçoit le signal de sortie du rhéomètre et qui est connecté à un système de traitement numérique 46 destiné à mesurer la viscosité et la densité du fluide.

Le signal provenant du rhéomètre est donc amplifié puis acquis et traité numériquement.

Le principe de fonctionnement du rhéomètre est mis en oeuvre par la méthode d'échos d'impulsion. Lors de l'émission, un signal électrique est converti en une impulsion de torsion par le transducteur électrique piézoélectrique qui le reçoit par l'intermédiaire des électrodes, et se propage, dans le capteur jusqu'à son extrémité inférieure où l'onde de torsion est réfléchie. Cette onde se propage en sens inverse dans le capteur puis est reçue par le transducteur qui la reconvertit en signal électrique : c'est le premier écho. Par réflexions successives aux deux extrémités du capteur, l'impulsion initiale crée une série de M échos.

Ainsi, le générateur 41 émet une impulsion sinusoïdale dont la fréquence porteuse est modulée en amplitude par un créneau de durée $\Gamma$. La durée de l'impulsion est choisie de telle sorte que deux échos successifs se propagent dans le capteur séparément. Pour un capteur de longueur égale à 700 mm, le temps de transit, de l'ordre, de 500 ms, impose de ne pas excéder 50 périodes pour une impulsion de fréquence porteuse de 100 KHz. La fréquence d'émission de l'impulsion, est de 10 KHz. Le temps de 100 ms est supérieur à la durée de l'atténuation propre du train des échos. Le capteur n'est donc parcouru que par une série d'échos à la fois. Le signal délivré par le générateur d'impulsions est amplifié par l'amplificateur de puissance et envoyé au transducteur qui transmet ensuite les échos à l'amplificateur de gain 45.

Le rhéomètre permet de mesurer les variations d'atténuation de l'amplitude $\Gamma A$ et de déphasage $\Gamma B$ de l'onde qui sont engendrées par le fluide au contact avec la surface latérale du capteur, sur une hauteur h. Rapportées à l'unité de longueur, ces variations s'expriment de la façon suivante :

$$\delta A = \frac{\Gamma A}{2nh} \text{ et } \delta B = \frac{\Gamma B}{2nh}$$

La précision des mesures dépend donc de la hauteur h du fluide dans le rhéomètre et de l'ordre n de l'écho sélectionné pour la mesure. Dans le rhéomètre selon l'invention, l'adaptation d'impédance entre le transducteur et le capteur permet d'exploiter des échos lointains et donc d'améliorer la précision.

Le système de traitement numérique 46 effectue tout d'abord l'échantillonage des signaux représentant les échos puis la quantification sur N niveaux de ces mêmes signaux. La précision des mesures dépend à la fois des niveaux de quantification et de la fréquence d'échantillonnage. Dans l'exemple de réalisation déjà cité, le nombre N de niveaux est égal à 8 et la fréquence à 500 points par période. Ensuite, le système de traitement détermine les variations $\delta A$ et $\delta B$ d'après les calculs suivants effectués à l'intérieur du régime permanent des échos et pour différentes hauteurs h de fluide dans le réservoir.

L'impulsion initiale sinusoïdale engendre dans l'état de référence, c'est-à-dire sans fluide, une série d'échos :

$$u'_n = U'_n \cos \Omega t, \text{ n variant de 1 à N}$$

En présence de fluide, l'écho n acquiert une atténuation d'amplitude et un déphasage supplémentaire et devient :

$$u_n = U'_n \, e^{-\Gamma A} \, . \, \cos (\Omega t - \Gamma B)$$

étant entendu que la dispersion du train d'ondes est négligeable et que le régime transitoire des échos n'est pas pris en compte.

Ce signal électrique qui représente un écho est acquis numériquement par le système de traitement qui prend le signal dans son ensemble et non sur une période particulière du train d'onde.

Pour la détermination de la variation de l'atténuation d'amplitude $\delta A$ par unité de longueur, on considère tout d'abord la variation $\delta A$ du signal au $n^{\text{ième}}$ écho :

$$u_n = U_n \cos (\Omega t - \Gamma B)$$

$$u_n = U'_n \, e^{-\Gamma A} \cos(\Omega t - \Gamma B)$$

d'où

$$\Gamma A = \mathrm{Log} \, \frac{U'_n}{U_n} = 2nh\,\delta A$$

Au $m^{\text{ième}}$ écho :

$$\Gamma A = \text{Log}\, \frac{U'_m}{U_m} = 2mh\,\delta A$$

De sorte que

$$\delta A = \frac{1}{2\,(n\text{-}m)\,h} \cdot \text{Log}\, \frac{U'_n}{U_n} \cdot \frac{U_m}{U'_m}$$

La puissance acoustique de l'écho n intègre le signal sur la durée d'une période :

$$P_n = \frac{1}{T} \int_O^T g(\Omega)\, .\, u^2{}_n(t)\,dt = g(\Omega)\, U^2{}_n$$

L'impédance électrique $g(\Omega)$ dépend de la fréquence et de l'état du capteur, mais non du rang de l'écho. Le calcul de la variation de l'atténuation d'amplitude $\delta A$ par unité de longueur s'obtient donc par la formule :

$$\delta A = \frac{1}{4\,(n\text{-}m)\,h} \cdot \text{Log}\, \frac{P'_n}{P_n} \times \frac{P_m}{P'_m}$$

Pour la détermination de la variation de déphasage $\delta B$, on intègre le signal sur la durée de l'émission et on calcule le produit du signal d'un écho n dans l'état de référence $u_n{}^\circ(t)$ et de la dérivée du signal du même écho n en présence de fluide $u_n(t)$. Le résultat est égal à l'aire de la courbe de Lissajoux :

$$I_n = \int_O^T u'_n(t)\, .\, \frac{du_n}{dt}\, dt$$

$$I_n = U'^2{}_n\, e^{-\Gamma A}\, .\, \pi\, .\, \sin \Gamma B$$

On calcule d'autre part le produit des deux signaux du même écho n :

$$Jn = \int_O^T u'_n(t)\, .\, u_n(t)\,dt$$

On fait de même avec un écho d'ordre m, éloigné de n.

Finalement, le calcul de la variation de déphasage est obtenu par la formule :

$$\delta B = \frac{1}{2\,(n\text{-}m)\,h} \cdot \left( \text{Artg}\, \frac{I_n}{\Omega J_n} - \text{Artg}\, \frac{I_m}{\Omega J_m} \right)$$

en utilisant deux échos n et m.

Comme cela a été décrit auparavant, la détermination de ces variations $\delta A$ et $\delta B$, permet de calculer l'impédance caractéristique du fluide et d'en déduire, sa viscosité complexe, sa densité étant obtenue en faisant varier la température du fluide.

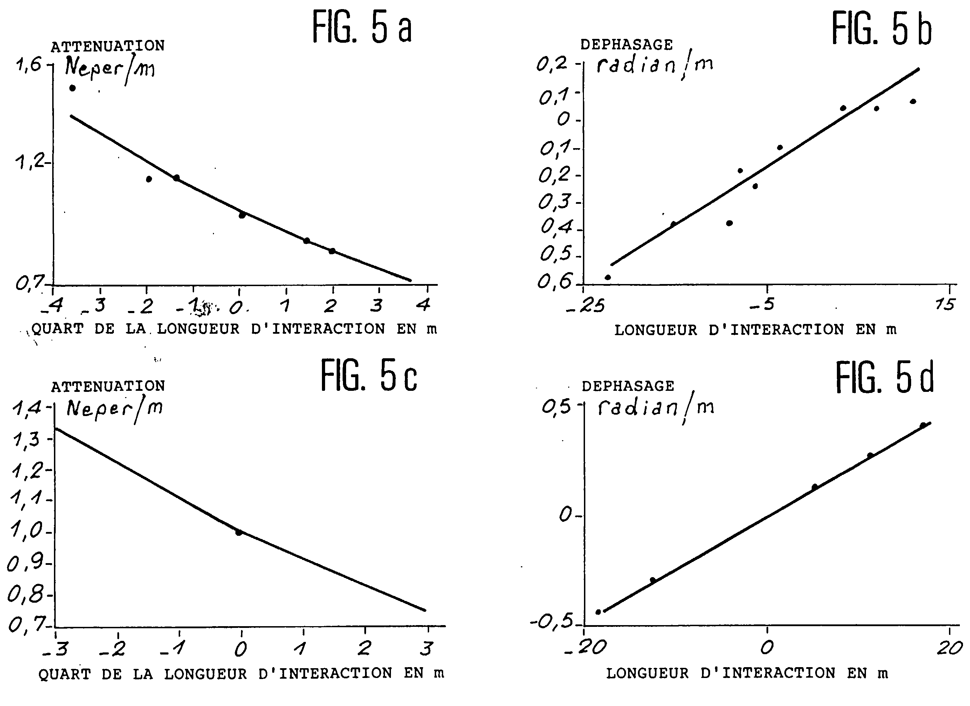

Les figures 5a et 5b représentent les courbes d'atténuation $\delta A$ et de déphasage $\delta B$ de l'onde de torsion pour de l'alcool, à 63Khz, obtenues pour différentes hauteurs d'alcool dans le réservoir où est plongé le capteur du rhéomètre, en utilisant un transducteur à quartz. Les figures 5c et 5d représentent les mêmes courbes pour l'alcool, avec un transducteur à oxyde de Bismuth et Germanium $Bi_{12}GeO_{20}$. En comparant ces courbes, on constate qu'il apparaît une erreur voisine de 5 % avec le transducteur à quartz, alors qu'avec le $Bi_{12}GeO_{20}$, elle n'est que de 0,8 %.

Les figurés 6 et 7 représentent respectivement la courbe de sensibilité d'un rhéomètre à transducteur à quartz et un rhéomètre à cristal de sillénites selon l'invention, pour des solvants newtoniens. La courbe de sensibilité est obtenue en portant, en abscisse, les valeurs de variation d'atténuation d'amplitude $\delta A$ et de déphasage mesurées par le rhéomètre et en ordonnée, la valeur de l'impédance caractéristique $Z^*$ connue par un autre procédé.

**Revendications**

1. Rhéomètre fonctionnant dans le domaine des hautes fréquences comprises entre plusieurs dizaines et plusieurs centaines de kiloHertz, comportant un transducteur (3) de torsion composé d'un cristal piézoélectrique excité électriquement par l'intermédiaire d'électrodes (15), destiné à émettre et recevoir des ondes de torsion, couplé à un capteur (2) desdites ondes de torsion plongé dans un réservoir de fluide à mesurer et réalisé à partir d'une tige en alliage de Fer et de Nickel dont le coefficient thermoélastique de torsion est voisin de zéro, le transducteur (3) et le capteur (2) étant placés dans une enceinte (6), caractérisé en ce que :

- le transducteur (3) est un cylindre de cristal de la classe des sillénites, de hauteur déterminant les fréquences de résonance du mode de torsion, et doté d'un moyen d'excitation électrique ;
- le capteur (2) est relié rigidement au transducteur (3) par un point de colle d'épaisseur très inférieure à la longueur d'onde de l'onde de torsion émise par le transducteur (3) ; les diamètres respectifs ($D_t$) et ($D_c$) du transducteur (3) et du capteur (2) étant choisis pour que le coefficient de réflexion à l'interface du transducteur-capteur soit nul.

2. Rhéomètre selon la revendication 1, caractérisé en ce que le cristal du transducteur (3) est de l'oxyde de Bismuth et de Germanium $Bi_{12}GeO_{20}$.

3. Rhéomètre selon la revendication 1, caractérisé en ce que le cristal du transducteur (3) est de l'oxyde de Bismuth et de Sicilium $Bi_{12}SiO_{20}$.

4. Rhéomètre selon la revendication 1, caractérisé en ce que le cristal du transducteur (3) est de l'oxyde de Bismuth et de Titane $Bi_{12}TiO_{20}$.

5. Rhéomètre selon l'une des revendications 1 à 4, caractérisé en ce que le moyen d'excitation électrique du cristal du transducteur (3) est constitué de quatre électrodes (15) disposées selon une configuration en cadrans séparées les unes des autres par les axes cristallographiques (110) et (1-10), recouvrant chacune un quart de la surface latérale du cristal, les électrodes alimentées par une tension positive, alternant avec celles alimentées par une tension négative, créant ainsi des lignes de champ (16) en arc de cercle.

6. Rhéomètre selon l'une des revendications 1 à 4, caractérisé en ce que le moyen d'excitation électrique du cristal du transducteur (3) est constitué par un tube de verre (17) dont le diamètre est légèrement supérieur à celui du cristal et de même hauteur, entourant ledit cristal, ledit tube étant métallisé sur sa face interne (18) au regard du cristal de façon à réaliser au moins deux paires d'électrodes, alternativement alimentées par des tensions positives et négatives, destinées à polariser le transducteur (3) par influence.

7. Rhéomètre selon l'une des revendications 1 à 6, caractérisé en ce que la hauteur du capteur (2) est fonction de la gamme de fréquences de fonctionnement du rhéomètre et son rayon est tel que l'impédance du capteur est nulle dans l'état de référence du rhéomètre, sans fluide.

8. Rhéomètre selon la revendication 7, caractérisé en ce que le capteur (2) subit un traitement thermique de revenu destiné à annuler le coefficient thermoélastique de torsion, dans la gamme des températures de fonctionnement du rhéomètre.

9. Rhéomètre selon l'une quelconque des revendications précédentes 1 à 8, caractérisé en ce que l'enceinte (6) est thermostatée et constituée d'une enveloppe de verre dont la paroi interne constitue le réservoir de fluide, qui est maintenu à une pression constante.

10. Dispositif de mesure de la viscosité d'un fluide comprenant un rhéomètre (40) selon l'une des revendications précédentes fonctionnant à l'émission et à la réception selon la méthode des échos d'impulsions, caractérisé en ce qu'il comprend un générateur d'impulsions électriques (41) suivi d'un amplificateur de puissance (42) qui est relié au rhéomètre (40) ledit rhéomètre étant relié d'autre part, à un amplificateur de gain (45) qui est suivi d'un système de traitement numérique (46) destiné à mesurer la viscosité du fluide.

11. Procédé de mesure de la viscosité d'un fluide mis en oeuvre par un dispositif de mesure comprenant un rhéomètre dont le transducteur est un cylindre de cristal de la classe des sillénites, de hauteur déterminant les fréquences de résonance du mode de torsion, et un système de traitement numérique, comportant les étapes suivantes, pour plusieurs hauteurs (h) de fluide dans le réservoir du rhéomètre :

- échantillonage des signaux représentant les échos ;
- quantification sur N niveaux desdits signaux ;

- détermination de la variation d'atténuation de l'amplitude ($\delta$A) de l'onde de torsion, par unité de longueur, pour au moins deux échos d'ordre n et m distincts et éloignés, puis dans le régime permanent des échos ;
- détermination de la variation de déphasage ($\delta$B) de l'onde de torsion, par unité de longueur, pour les mesures échos d'ordre n et m ;
- détermination de l'impédance caractéristique du fluide à partir des mesures de ($\delta$A) et ($\delta$B) ;
- calcul de la viscosité complexe du fluide, à partir de l'impédance caractéristique ;
- calcul de la densité du fluide en faisant varier la température de fonctionnement du rhéomètre.

12. Procédé de mesure selon la revendication 11, caractérisé en ce que la détermination de la variation d'atténuation de l'amplitude ($\delta$A) est obtenue, pour les échos d'ordre n et m, par les étapes suivantes :

- calcul de la puissance acoustique (Pn) et (Pm) des échos d'ordre n et m respectivement.
- calcul du logarithme népérien du rapport des puissances acoustiques desdits échos respectivement dans l'état de référence du rhéomètre ($P'_n$ et $P'_m$) et en présence de fluide ($P_n$ et $P_m$), égal au double de la variation d'atténuation de l'onde ($\Gamma$A) aux échos d'ordre n et m :

$$\Gamma A = \frac{1}{2} \, \text{Log} \, \frac{P'_n}{P_n}$$

- calcul de la variation d'atténuation ($\delta$A) par unité de longueur en appliquant la formule :

$$\delta A = \frac{1}{4\,(n\text{-}m)\,h} \cdot \text{Log} \, \frac{P'_n}{P_n} \, X \, \frac{P_m}{P'_m}$$

et en ce que la détermination de la variation de déphasage ($\delta$B) de l'onde de torsion est obtenue par les étapes suivantes, pour chacun des échos d'ordre n et m :
- calcul de l'intégrale, sur une période (T) d'émission de l'onde du produit du signal représentant l'écho dans l'état de référence du rhéomètre u'(t) et de la dérivée par rapport au temps du signal du même écho u(t) en présence du fluide :

$$I_n = U'^2_n \, e^{-\Gamma A} \cdot \pi \, \sin \Gamma B$$

et

$$I_m = U'^2_m \, e^{-\Gamma A} \cdot \pi \, \sin \Gamma B$$

- calcul de l'intégrale, sur une période (T) du produit des deux signaux u'(t) et u(t) :

$$J_n = \int_0^T u'_n(t) \cdot u_n(t)\,dt$$

et

$$J_m = \int_0^T u'_m(t) \cdot u_m(t)\,dt$$

- calcul de variation de déphasage ($\delta$B) à partir des intégrales $I_n$, $I_m$, $J_n$ et $J_m$ par la formule :

$$\delta B = \frac{1}{4\,(n\text{-}m)\,h} \left[ \text{Arctg} \, \frac{I_n}{\Omega J_n} - \text{Arctg} \, \frac{I_m}{\Omega J_m} \right]$$

**Patentansprüche**

1. Hochfrequenzrheometer, das im Frequenzbereich zwischen zehn und einigen Hundert Kiloherz arbeitet und einen Torsionswandler (3) enthält, der aus einem piezoelektrischen Kristall besteht, das mit Hilfe von Elektroden elektrisch angeregt wird, und mit einem Meßfühler (2) für die genannten Torsionswellen gekoppelt ist, der in einen Behälter mit der zu messenden Flüssigkeit getaucht wird und aus einem Stab aus einer Eisen-Nickel-Verbindung besteht, deren thermoelastischer Torsionskoeffizient annähernd null ist, wobei der Wandler (3) und der Meßfühler (2) von einer Schützhülle umgeben werden,

dadurch gekennzeichnet, daß:

- der Wandler ein Sillenit-Kristall-Zylinder ist, dessen Höhe die Resonanzfrequenz des Torsionsmodus bestimmt und der mit einem elektrischen Erreger ausgestattet ist;
- der Meßfühler (2) über eine Klebestelle, deren Stärke wesentlich kleiner ist als die Wellenlänge der von dem Wandler (3) ausgesendeten Torsionswelle, mit dem Wandler (3) starr verbunden ist;
- der Durchmesser (Dt) des Wandlers (3) und der Durchmesser (Dc) des Meßfühlers so ausgewählt werden, daß der Reflexionskoeffizient an der Schnittstelle zwischen Wandler und Meßfühler null ist.

2. Rheometer nach Anspruch 1, dadurch gekennzeichnet, daß das Kristall des Wandlers (3) aus Wismuth-Germanium-Oxid $Bi_{12}GeO_{20}$ besteht.

3. Rheometer nach Anspruch 1, dadurch gekennzeichnet, daß das Kristall des Wandlers (3) aus Wismuth-Silizium-Oxid $Bi_{12}SiO_{20}$ besteht.

4. Rheometer nach Anspruch 1, dadurch gekennzeichnet, daß das Kristall des Wandlers (3) aus Wismuth-Titan-Oxid $Bi_{12}TiO_{20}$ besteht.

5. Rheometer nach einem der Ansprüche 1 bis 4, dadurch gekennzeichnet, daß der elektrische Erreger des Kristalls des Wandlers (3) aus vier Elektroden (15) besteht, die nach einer Unterteilung in vier durch die kristallografischen Achsen (110) und (1-10) getrennte Quadranten angeordnet sind, wobei jede der Elektroden ein Viertel der seitlichen Oberfläche des Kristalls überdeckt und sich die Elektroden, die mit einer positiven Spannung gespeist werden, mit denen, die mit einer negativen Spannung gespeist werden, abwechseln, wodurch kreisbogenförmige Feldlinien (16) erzeugt werden.

6. Rheometer nach einem der Ansprüche 1 bis 4, dadurch gekennzeichnet, daß der elektrische Erreger des Kristalls des Wandlers (3) aus einem das genannte Kristall umgebenden Glasrohr (17) besteht, dessen Durchmesser etwas größer ist als der des Kristalls, der aber die gleiche Höhe hat wie das Kristall, wobei das genannte Rohr auf seiner Innenseite (18) in Blickrichtung des Kristalls einen Metallüberzug aufweist, wodurch mindestens zwei Paare von Elektroden gebildet werden, die abwechselnd durch positive und negative Spannungen gespeist werden, welche zur Polarisierung des Wandlers (3) durch Influenz bestimmt sind.

7. Rheometer nach einem der Ansprüche 1 bis 6, dadurch gekennzeichnet, daß die Höhe des Meßfühlers (2) von dem Betriebsfrequenzbereich des Rheometers abhängt und sein Radius so gewählt wird, daß die Impedanz des Meßfühlers im Bezugszustand des Rheometers ohne Flüssigkeit null ist.

8. Rheometer nach Anspruch 7, dadurch gekennzeichnet, daß der Meßfühler (2) einer Wärmebehandlung durch Nachglühen unterzogen wird, um den thermoelastischen Torsionskoeffizienten im Betriebstemperaturbereich des Rheometers auf null zu bringen.

9. Rheometer nach einem der vorangegangenen Ansprüche 1 bis 8, dadurch gekennzeichnet, daß die Schutzhülle (6) temperaturgeregelt ist und aus einer Glashülse besteht, deren innere Wandung einen Flüssigkeitsbehälter bildet, wobei der Druck der Flüssigkeit konstant gehalten wird.

10. Gerät zur Messung der Viskosität einer Flüssigkeit, das ein Rheometer (40) nach einem der vorangegangenen Ansprüche enthält, welches durch Senden und Empfangen nach der Echoimpulsmethode arbeitet, dadurch gekennzeichnet, daß es einen elektrischen Impulsgenerator (41) mit einem nachgeschalteten Leistungsverstärker (42) enthält, der an ein Rheometer (40) angeschlossen ist, wobei das genannte Rheometer wiederrum mit einen Verstärker (45) verbunden ist, dem ein Digitalverarbeitungssystem (46) nachgeschaltet ist, das zur Messung der Viskosität der Flüssigkeit bestimmt ist.

11. Verfahren zur Messung der Viskosität einer Flüssigkeit, das durch ein Meßgerät realisiert wird, welches ein Rheometer, dessen Wandler ein Sillenit-Kristall-Zylinder ist, wobei die Höhe des Zylinders die Resonanzfrequenzen des Torsionsmodus bestimmt, und ein digitales Verarbeitungssystem beinhaltet, wobei das Verfahren die folgenden Etappen für verschiedene Flüssigkeitsfüllstände in dem Rheometerbehälter umfaßt:

- Abtastung der repräsentativen Echosignale;
- Quantisierung auf N Pegel der genannten Signale;

- Ermittlung der Dämpfungsänderung der Amplitude ($\delta A$) der Torsionswelle pro Längeneinheit für mindestens 2 Echos n-ter und m-ter Ordnung, die deutlich voneinander getrennt und entfernt sind, danach im Echodauerbetrieb;
- Ermittlung der Phasenverschiebungsänderung ($\delta B$) der Torsionswelle pro Längeneinheit für die Messung von Echos n-ter und m-ter Ordnung;
- Ermittlung der für die Flüssigkeit charakteristische Impedanz ausgehend von der Messung von ($\delta A$) und ($\delta B$) ;
- Berechnung der komplexen Viskosität der Flüssigkeit ausgehend von der charakteristischen Impedanz;
- Berechnung der Dichte der Flüssigkeit durch Änderung der Betriebstemperatur des Rheometers.

12. Meßverfahren nach Anspruch 11, dadurch gekennzeichnet, daß die Ermittlung der Dämpfungsänderung der Amplitude ($\delta A$) für die Echos n-ter und m-ter Ordnung in den folgenden Etappen realisiert wird:

- Berechnung der akustischen Leistung (Pn) und (Pm) der Echos n-ter bzw. m-ter Ordnung.
- Berechnung des natürlichen Logarithmus des Verhältnisses der akustischen Leistungen der genannten Echos im Bezugszustand des Rheometers (P'n und P'm) und bei Vorhandensein einer Flüssigkeit (Pn und Pm), das dem doppelten Wert der Dämpfungsänderung der Welle ($\Gamma A$) bei den Echos n-ter und m-ter Ordnung entspicht:

$$\Gamma A = \frac{1}{2} \, \text{Log} \, \frac{P'n}{Pn}$$

- Berechnung der Dämpfungsänderung ($\delta A$) pro Längeneinheit durch Anwendung der Formel

$$\delta A = \frac{1}{4\,(n-m)\,h} \cdot \text{Log} \, \frac{P'n}{Pn} \, X \, \frac{Pm}{P'm}$$

und dadurch, daß die Ermittlung der Phasenverschiebungsänderung ($\delta B$) der Torsionswelle für jedes der Echos n-ter und m-ter Ordnung durch die folgenden Etappen realisiert wird:

- Berechnung des Integrals über eine Periode (T) der Aussendung der Welle des Produktes aus dem repräsentativen Echosignal im Bezugszustand des Rheometers u'(t) und der Ableitung in bezug auf die Zeitdauer des Signals desselben Echos u(t) bei Vorhandensein einer Flüssigkeit:

$$\text{In} = U'^2 n \, e^{-\Gamma A} \cdot \pi \, \sin \Gamma B$$

und

$$\text{Im} = U'^2 m \, e^{-\Gamma A} \cdot \pi \, \sin \Gamma B$$

- Berechnung des Integrals über eine Periode (T) des Produktes aus den beiden Signalen u'(t) und u(t):

$$\text{Jn} = \int_{O}^{T} u'n(t) \cdot un(t)\,dt$$

und

$$\text{Jm} = \int_{O}^{T} u'm(t) \cdot um(t)\,dt$$

- Berechnung der Änderung der Phasenverschiebung ($\delta B$) ausgehend von den Integralen In, Im, und Jm durch die Formel:

$$\delta B = \frac{1}{4\,(n-m)\,h} \left[ \text{Arctan} \, \frac{\text{In}}{\Omega \text{Jn}} - \text{Arctan} \, \frac{\text{Im}}{\Omega \text{Jm}} \right]$$

## Claims

1. Rheometer operating in the high frequency range between a few dozen and a few hundred kilohertz, having a torsion transducer (3) formed by a piezoelectric crystal electrically excited by means of electrodes (15) for transmitting and receiving torsion waves and coupled to a sensor (2) for said torsion waves placed in a tank of fluid to be measured and formed from an iron and nickel alloy rod, whose thermoelastic torsion coefficient is close to zero, the transducer (3) and the sensor (2) being placed in a chamber (6),
characterized in that:

- the transducer (3) is a crystal cylinder from the class of sillenites having a height determining the resonant frequencies of the torsion mode and having an electrical excitation means,
- the sensor (2) is rigidly connected to the transducer (3) by an adhesion point of thickness well below the wavelength of the torsion wave transmitted by the transducer (3),
- the respective diameters ($d_t$ and $d_c$) of the transducer (3) and the sensor (2) being chosen so that the reflection coefficient at the interface of the transducer - sensor is zero.

2. Rheometer according to claim 1, characterized in that the crystal of the transducer (3) is bismuth and germanium oxide $Bi_{12} GeO_{20}$.

3. Rheometer according to claim 1, characterized in that the crystal of the transducer (3) is bismuth and silicon oxide $Bi_{12}SiO_{20}$.

4. Rheometer according to claim 1, characterized in that the crystal of the transducer (3) is bismuth and titanium oxide $Bi_{12} TiO_{20}$.

5. Rheometer according to one of the claims 1 to 4, characterized in that the means for the electrical excitation of the crystal of the transducer (3) is constituted by four electrodes (15) arranged in a configuration of dials separated from one another by the crystallographic axes (110) and (1-10), each covering a quarter of the lateral surface of the crystal, the electrodes supplied with a positive voltage alternating with those supplied with a negative voltage, thus creating field lines (16) in the shape of arcs of circles.

6. Rheometer according to one of the claims 1 to 4, characterized in that the means for the electrical excitation of the crystal of the transducer (3) is constituted by a glass tube (17), the diameter of which is slightly greater than that of the crystal and is of the same height, surrounding said crystal, said tube being metallized on its internal face (18) facing the crystal in such a way as to form at least two pairs of electrodes, alternately supplied with positive and negative voltages, designed to polarize the transducer (3) by induction.

7. Rheometer according to one of the claims 1 to 6, characterized in that the height of the sensor (2) is a function of range of operating frequencies of the rheometer and its radius is such that the impedance of the sensor is zero in the state of reference of the rheometer, without fluid.

8. Rheometer according to claim 7, characterized in that the sensor (2) undergoes a thermal annealing treatment designed to cancel the thermoelastic coefficient of torsion, in the range of temperatures of operation of the rheometer.

9. Rheometer according to one of the above claims 1 to 8, characterized in that the chamber (6) is thermostat-controlled and constituted by a glass casing, the internal wall of which constitutes the container of fluid, which is maintained at constant pressure.

10. Device to measure the viscosity of a fluid using a rheometer (40) according to one of the preceding claims, working at emission and at reception according to the method of the pulse echoes, characterized in that said device comprises an electrical pulse generator (41) followed by a power amplifier (42) which is connected to the rheometer (40), said rheometer being connected furthermore to a gain amplifier (45) that is followed by a digital processing system (46) designed to measure the viscosity of the fluid.

11. Process for measuring the viscosity of a fluid performed by a measuring device comprising a rheometer, whose transducer is a crystal cylinder of the class of sillenites and having a height determining the resonant frequencies of the torsion mode and a digital processing system having the following stages for several fluid heights (h) in the tank of the rheometer:

- sampling the signals representing echoes,
- quantification on N levels of said signals,
- determination of the attenuation variation of the amplitude ($\delta A$) of the torsion wave, per unit of length, for at least two separate and remote order n and m echoes and then in the permanent state of the echoes,
- determination of the phase shift variation ($\delta B$) of the torsion wave, per unit of length, for order n and m echo measurements,
- determination of the characteristic impedance of the fluid from the measurements of ($\delta A$) and ($\delta B$),
- calculation of the complex viscosity of the fluid from the characteristic impedance,

- calculation of the density of the fluid by varying the operating temperature of the rheometer.

12. Measuring process according to claim 11, characterized in that the determination of the attenuation variation of the amplitude ($\delta A$) is obtained, for order n and m echoes, by the following stages:

- calculation of the acoustic power ($P_n$ and $P_m$) of the order n and m echoes respectively,
- calculation of the natural logarithm of the ratio of the acoustic powers of said echoes respectively in the reference state of the rheometer ($P'_n$ and $P'_m$) and in the presence of fluid ($P_n$ and $P_m$), equal to twice the attenuation variation of the wave ($\Gamma A$) at order n and m echoes:

$$\Gamma A = \frac{1}{2} \, \text{Log} \, \frac{P'_n}{P_n}$$

- calculation of the attenuation variation ($\delta A$) per unit of length by applying the formula:

$$\delta A = \frac{1}{4\,(n\text{-}m)\,h} \cdot \text{Log} \, \frac{P'_n}{P_n} \times \frac{P_m}{P'_m}$$

and in that the determination of the phase shift variation ($\delta B$) of the torsion wave is obtained by the following stages, for each of the order n and m echoes:

- calculation of the integral, on a transmission period (T) of the wave of the product of the signal representing the echo in the reference state of the rheometer u'(t) and the derivative with respect to time of the signal of the same echo (u(t) in the presence of fluid:

$$I_n = U'^2_n \, e^{-\Gamma A} \cdot \pi \sin \Gamma B$$

and

$$I_m = U'^2_m \, e^{-\Gamma A} \cdot \pi \sin \Gamma B$$

- calculation of the integral, on a period (T) of the product of the two signals u'(t) and u(t):

$$J_n = \int_0^T u'_n(t) \cdot u_n(t)dt$$

and

$$J_m = \int_0^T u'_m(t) \cdot u_m(t)dt$$

- calculation of the phase shift variation ($\delta B$) from the integrals $I_n$, $I_m$, $J_n$ and $J_m$ by the formula:

$$\delta B = \frac{1}{4\,(n\text{-}m)\,h} \left[ \text{Arctg} \, \frac{I_n}{\Omega J_n} - \text{Arctg} \, \frac{I_m}{\Omega J_m} \right]$$

13

FIG.1

FIG. 2

FIG. 3

EP 0 540 111 B1

FIG. 4

FIG. 5a

FIG. 5b

FIG. 5c

FIG. 5d

FIG. 6

FIG. 7